# EUROPEAN PATENT SPECIFICATION

(11) **EP 1 950 093 B1**
(45) Date of publication and mention of the grant of the patent: **15.06.2011**
(21) Application number: 07001749.6
(22) Date of filing: 26.01.2007
(51) Int. Cl.: B60R 11/02

(54) **Attachment of a mobile electronic device to a vehicle audio device**
Befestigung eines mobilen elektronischen Gerätes an einem Audiogerät eines Fahrzeugs
Fixation d'un dispositif électronique mobile sur un dispositif audio d'un véhicule

(43) Date of publication of application: 30.07.2008
(73) Proprietor: Harman Becker Automotive Systems GmbH, 76307 Karlsbad (DE)
(72) Inventor: Wlotzka, Paul, 72622 Nürtingen (DE); Johannsen, Ulrike, 70565 Stuttgart (DE); Gressly, Dominique, 70175 Stuttgart (DE)
(74) Representative: Bertsch, Florian Oliver

(56) References cited:
- WO-A-2004/083658
- DE-A1- 10 125 063
- DE-A1- 19 746 161
- US-A- 4 058 357
- US-A1- 2002 137 541

## Description

### Field of Invention

The present invention relates to a vehicle audio device, e.g., a car radio, installed in a vehicle and attachment of a mobile electronic device to the vehicle audio device.

### Background of the invention

In recent years the combination and mechanical and electrical connection of different electronic devices in vehicles, in particular, in automobiles, became an issue of growing importance (car multimedia). In particular, there is an increasing need or at least request for a reliable and simple attachment of a mobile device, e.g., a personal navigation device, to a fixed audio device, e.g., a car radio, that is already installed in the vehicle.

In the art, different mechanical attachment means for attaching a mobile device to an audio device installed in a vehicle compartment are known. Such mechanical attachment means typically including a number of mechanical elements as, e.g., springs, knurls, gudgeons, pivots, notches and screws, that are relatively expansive and result in rather complicated mechansims. Moreover, mechanical attachment means bear the risk of breakage and inevitably suffer from mechanical wear. Presently employed lock and release mechanisms are uncomfortable in handling and due to the mechanical wear the handling properties deteriorate in the course of the service life.

In addition, known mechanical attachment means not only affect the aesthetic appearance of the vehicle audio devices but also affect the product design due to protruding mechanical elements or slots, etc.

It is, therefore, an object of the present invention to provide a solution of the problem of a reliable, fast and simple attachment of a mobile electronic device to an audio device already installed in a vehicle compartment that overcomes the above-mentioned drawbacks of the art.

EP0 899 889 A2 discloses a vehicle audio device according to the preamble of claim 1, a mobile electronic device according to the preamble of claim 5 and a method according to the preamble of claim 7.

### Description of the Invention

According to the invention, there is provided a vehicle audio device as defined in independent claim 1, a mobile electronic device as defined in independent claim 5 and a method for attaching a mobile electronic device to a vehicle audio device as defined in independent claim 7.

By the magnetic means the necessity for expensive, accident-sensitive and uncomfortable mechanical fasteners, clamps and fittings is overcome. The product design is no longer limited with regard to mechanical attachment means.

According to one embodiment, the magnetic means for attaching a mobile electronic device comprises a permanent magnet, e.g., made of an alloy of iron and/or copper, or a yoke plate, in particular, an iron plate. The permanent magnet can also be in the form of a plate. The permanent magnet and the yoke plate can be provided at the front of the vehicle audio device, e.g., in form of a face plate arranged below or above or alongside an operation section of the audio device that may comprise buttons and/or switches.

Moreover, the permanent magnet and the yoke plate can be embedded in the mobile electronic device or the vehicle audio device, respectively. In particular, the permanent magnet and the yoke plate can be casted integral with a housing of the mobile electronic device or the vehicle audio device, respectively, that is made of plastic material. Thus, no additional element outside the housing(s) is needed.

Such a permanent magnet and a yoke plate represent simple and inexpensive means for magnet attachment. A yoke plate can be used, if the mobile electronic device that is to be attached to the vehicle audio device is provided with a permanent magnet.

The disclosed magnetic attachment is particularly useful for a car radio (being the above-mentioned vehicle audio device). By the magnetic attachment means the mobile electronic device can be attached to the car radio which is usually installed at a prominent position in the vehicular cabin of an automobile. Attachment of the mobile device to a car radio, thus, is desirable in terms of operation of the mobile device either by a driver or front passenger. At the position at or close to the vehicle audio device the mobile electronic device can readily be operated and a display on the mobile electronic device can easily be seen by the driver and a front passenger.

According to the invention, the vehicle audio device comprises electrical connections (contacts) for connection with the mobile electronic device. The mobile electronic device is not only magnetically attached to the vehicle audio device (e.g., a car radio) but can also communicate with the latter after attachment by means of the electrical connections. In particular, the electrical connections comprise a connection for electric power supply. Thus, the mobile device can be charged by the car battery via the vehicle audio device that it is magnetically attached to.

Additionally or alternatively the vehicle audio device may be provided with contacts that enable activation of some radio link to the mobile electronic device, e.g., by means of the Bluetooth or WLAN technology. These contacts may be pressure sensitive or magnetic contacts that allow for activation of the radio link in response to the attachment of the mobile electronic device. Of course, an infrared link may be provided rather than or in addition to the radio link. Combined usage of different electronic devices (one fixed in the vehicle, the other one temporarily attached to the first one) is facilitated by the magnetic attachment supplemented by some communication link between the electronic devices.

According to another embodiment the above-described examples for the inventive vehicle audio device further comprise an adjustment aid configured to adjust the mobile electronic device at the vehicle audio device. Such an adjustment aid can secure the mobile device and facilitate accurate positioning. Notches, slots and collars may be used as the adjustment aid. For example, a circumferential ridge may be provided on a magnetic radio face plate.

It has to be stressed, however, that the adjustment aid differs from mechanical attachment means of the art in that the adjusting elements/portions are made much smaller, weaker and much more unobtrusive. This is enabled by the magnetic attachment means that mainly guarantees attachment of the mobile electronic device to the vehicle audio device.

The adjustment aid is configured to only provide some fine-adjustment and can be formed without affecting the aesthetic appearance of the vehicle audio device. It can even be integrated in and play a part in some pleasuring design.

The mobile electronic device according to the invention comprises magnetic means for attachment to a vehicle audio device. The magnetic means for attachment to a vehicle audio device may comprise a permanent magnet or a yoke plate, in particular, an iron yoke plate. The yoke plate can be used for magnetic attachment in the case that the vehicle audio device is provided with a permanent magnet. The mobile electronic device can be readily attached to the vehicle audio device, in particular, a car radio.

It may be preferred to provide both the vehicle audio device and the mobile electronic device with a permanent magnet plate. In this case, a radio face plate, e.g., can have the magnetic north pole directed away from the car radio that comprises the face plate (directed in to interior of the passenger compartment of the vehicle) and the mobile electronic device can comprise a back plate made of the permanent magnet with the magnetic south pole directed away from the mobile device. Reverse polarization is, of course, also possible.

Moreover, it may be preferred that the vehicle audio device and/or the mobile electronic device comprise more than one permanent magnet. Permanent magnets can be distributed in contact surfaces at which both devices contact each other in the state of attachment. Polarization of the multiple permanent magnets may differ in each of the contact surfaces and it is only to be guaranteed that in the state of attachment south and north poles of the respective permanent magnets of the vehicle radio device and the mobile electronic device face each other.

According to the invention, the mobile electronic device is a personal navigation device.

Magnetic attachment is particularly useful for a personal navigation device. Personal navigation devices become increasingly prevalent in recent years. In the art attachment of this kind of navigation aids is, however, difficult. Moreover, the driver must be enabled to watch an optical display (if present) of the personal navigation device. Therefore, magnetic attachment of a personal navigation device to a car radio is advantageous.

According to the invention, the mobile electronic device further comprises electrical connections for connection with the vehicle audio device. Electrical connections as well as means for a radio/IR link with the vehicle audio device can be provided for the mobile electronic device similar as discussed above for the case of the vehicle audio device in order to establish a communication channel between both devices.

The present invention also provides a vehicle communication system as defined in dependent claim 9.

According to an embodiment of the method defined in independent claim 7 the mobile electronic device is provided with a first permanent magnet and the vehicle audio device is provided with a yoke plate or a second permanent magnet and wherein the mobile electronic device is attached to the yoke plate or the second permanent magnet of the vehicle audio device by means of the first permanent magnet or the mobile electronic device is provided with a yoke plate and the vehicle audio device is provided with a permanent magnet and wherein the mobile electronic device is attached to the permanent magnet of the vehicle audio device.

According to the invention, the method for attaching a mobile electronic device to a vehicle audio device comprises the step of electrically connecting the mobile electronic device and the vehicle audio device. Moreover, a radio or IR link may be established between both devices.

The present invention also provides a vehicle compartment (passenger compartment of a vehicle, in particular, an automobile) as defined in dependent claim 10.

Additional features and advantages of the present invention will be described with reference to the drawing. In the description, reference is made to the accompanying figure that is meant to illustrate preferred embodiments of the invention. It is understood that such embodiments do not represent the full scope of the invention.

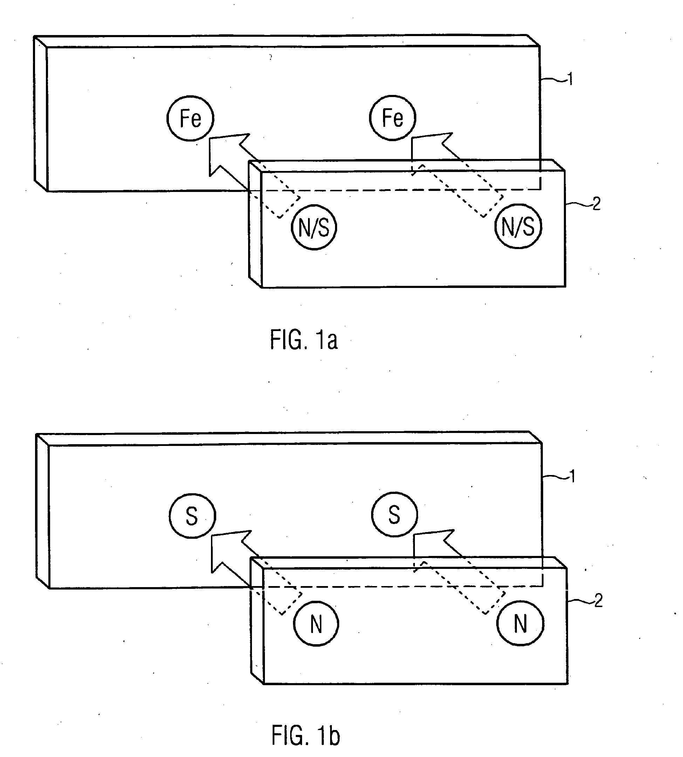

Figure 1 illustrates two examples of magnetic attachment of a mobile electronic device to a vehicle audio device wherein the former comprises a permanent magnet in form of a plate and the latter comprises an iron yoke plate (Figure 1 a) or wherein both devices comprise permanent magnets (Figure 1b).

Figure 1 a shows an iron yoke plate 1 that represents a radio face plate of a car radio installed in the passenger compartment of an automobile. Both the yoke plate and the face plate may be brushed, anodized or varnished in accordance with particular design specifications. In Figure 1 a it is also shown a permanent magnet plate 2 being a part of a mobile electronic device that is to be attached to the car radio. In the present example, the mobile electronic device is a portable personal navigation device, e.g., a Becker Traffic Assist Pro 7929. The permanent magnet plate 2 is fixed at the back surface of the portable personal navigation device.

The portable personal navigation device can easily be attached to as well as detached from the car radio by means of the magnetic force exerted between the iron yoke plate 1 and the permanent magnet plate 2.

The radio face plate 1 can, thus, be formed in a smooth and aesthetically pleasing manner and can be freely designed without any limitation by mechanical elements that are needed in the art for the attachment of any mobile device to the car radio. Of course, the car radio could be provided with the permanent magnet rather than the yoke plate and the mobile electronic device could be provided with the yoke plate rather than the permanent magnet for facilitating the magnetic attachment.

Figure 1b shows another example for the inventive magnetic attachment of a mobile device to a vehicle audio device. Here, the radio front plate 1 is built from a permanent magnet with the magnet south pole directed away from the radio device (i.e. in the direction to the interior of the vehicle compartment). Correspondingly, the mobile device comprises a permanent magnet plate 2 at the back surface with the magnetic north pole directed away from the back surface. Thus, the magnetic south pole of the radio front plate 1 and the magnetic north pole of the permanent magnet plate 2 of the mobile electronic device are opposed to each other thereby facilitating magnetic attachment of the mobile electronic device to the car radio (or a different audio device installed in a vehicle compartment). The magnetic poles could be arranged vice versa, i.e. south pole and north pole can be interchanged.

According to another example, both plates may comprise a number of permanent magnets with alternating magnetic south and north poles opposed to the respective magnetic poles of the respective other plate. In other words, the radio front plate 1 may comprise a number of permanent magnets arranged such that some of the magnets have the magnetic south poles and other have the magnetic north poles outwardly directed. The permanent magnet plate 2 of the mobile electronic device matches the radio front plate 1 such that magnetic south poles of permanent magnets directed away from the back surface of the mobile electronic device are opposed by magnetic north poles of the radio front plate 1 in the state of attachment. By such an arrangement a more secure attachment may be achieved.

In the above described examples the permanent magnets can, e.g., be made of alloys of Fe, Co, Mn, Cu or of ceramic oxides as barium or iron oxide. In principle, the permanent magnets may also be rare earth magnets, e.g., a neodymium-iron-boron compound, providing strong but relatively expensive magnets. The radio face plate may itself represent a permanent magnet or one or more magnets may be embedded in the radio face plate or it may be coated with a permanent magnet film. The same holds for the permanent magnet plate of the personal navigation device.

All previously discussed embodiments are not intended as limitations but serve as examples illustrating features and advantages of the invention. It is to be understood that some or all of the above described features can also be combined in different ways.

## Claims

1. Vehicle audio device comprising magnetic means for attachment of a mobile electronic device to the vehicle audio device,
the vehicle audio device further comprising electrical connections for connection with the mobile electronic device, **characterized in that** the electrical connections comprise a connection for electric power supply, and **in that** the vehicle audio device is adapted for attachment of a personal navigation device as the mobile electronic device.

2. Vehicle audio device according to claim 1, wherein the magnetic means comprises a permanent magnet or a yoke plate, in particular, an iron plate.

3. Vehicle audio device according to claim 1 or 2, wherein the vehicle audio device is a car radio.

4. Vehicle audio device according to one of the preceding claims, further comprising an adjustment aid configured to adjust the mobile electronic device at the vehicle audio device.

5. Mobile electronic device comprising magnetic means for attachment to a vehicle audio device, the mobile electronic device further comprising electrical connections for connection with the vehicle audio device, **characterized in that** the mobile electronic device is a personal navigation device adapted for attachment to a vehicle audio device and **in that** the electrical connections comprise a connection for electric power supply.

6. Mobile electronic device according to claim 5, wherein the magnetic means for attachment to the vehicle audio device comprises a permanent magnet or a yoke plate, in particular, an iron plate.

7. Method for attaching a mobile electronic device to a vehicle audio device, comprising
providing magnetic means for magnetically attaching the mobile electronic device to the vehicle audio device; and
magnetically attaching the mobile electronic device to the vehicle audio device by the provided magnetic means;
further providing electrical connections for connecting the mobile electronic device with the vehicle audio device; and
electrically connecting the mobile electronic device and the vehicle audio device by the provided electrical connections;
**characterized in that**
the mobile electronic device is a personal navigation device and **in that** the electrical connections comprise a connection for electric power supply.

8. Method according to claim 7, wherein
the mobile electronic device is provided with a first permanent magnet and the vehicle audio device is provided with a yoke plate or a second permanent magnet and wherein the mobile electronic device is attached to the yoke plate or the second permanent magnet of the vehicle audio device by means of the first permanent magnet; or
the mobile electronic device is provided with a yoke plate and the vehicle audio device is provided with a permanent magnet and wherein the mobile electronic device is attached to the permanent magnet of the vehicle audio device.

9. Vehicle communication system, comprising
a vehicle audio device, in particular, a car radio, according to one of the claims 1 to 4;
a mobile electronic device according to one of the claims 5 to 6;
wherein the mobile electronic device is magnetically attachable to and detachable from the vehicle audio device.

10. Vehicle compartment comprising a vehicle audio device according to one of the claims 1 to 4 installed in the vehicle compartment and a mobile electronic device according to one of the claims 5 to 6 magnetically attached to the vehicle audio device according to one of the claims 1 to 4.

## Patentansprüche

1. Fahrzeugaudiovorrichtung, umfassend ein magnetisches Mittel zum Anbringen einer mobilen elektronischen Vorrichtung an der Fahrzeugaudiovorrichtung,
wobei die Fahrzeugaudiovorrichtung ferner elektrische Verbindungen zum Verbinden mit der mobilen elektronischen Vorrichtung umfasst, **dadurch gekennzeichnet, dass** die elektrischen Verbindungen eine Verbindung für eine elektrische Energieversorgung umfassen, und dass die Fahrzeugaudiovorrichtung für ein Anbringen einer persönlichen Navigationsvorrichtung als die mobile elektronische Vorrichtung ausgestaltet ist.

2. Fahrzeugaudiovorrichtung nach Anspruch 1, wobei das magnetische Mittel einen Permanentmagneten oder eine Jochplatte, insbesondere eine Eisenplatte umfasst.

3. Fahrzeugaudiovorrichtung nach Anspruch 1 oder 2, wobei die Fahrzeugaudiovorrichtung ein Autoradio ist.

4. Fahrzeugaudiovorrichtung nach einem der vorhergehenden Ansprüche, ferner umfassend eine Justierhilfe, welche ausgestaltet ist, die mobile elektronische Vorrichtung an der Fahrzeugaudiovorrichtung zu justieren.

5. Mobile elektronische Vorrichtung, umfassend ein magnetisches Mittel zum Anbringen an einer Fahrzeugaudiovorrichtung, wobei die mobile elektronische Vorrichtung ferner elektrische Verbindungen zum Verbinden mit der Fahrzeugaudiovorrichtung umfasst, **dadurch gekennzeichnet, dass** die mobile elektronische Vorrichtung eine persönliche Navigationsvorrichtung ist, welche für eine Anbringung an einer Fahrzeugaudiovorrichtung geeignet ist, und dass die elektrischen Verbindungen eine Verbindung für eine elektrische Energieversorgung umfassen.

6. Mobile elektronische Vorrichtung nach Anspruch 5, wobei das magnetische Mittel zum Anbringen an die Fahrzeugaudiovorrichtung einen Permanentmagneten oder eine Jochplatte, insbesondere eine Eisenplatte, umfasst.

7. Verfahren zum Anbringen einer mobilen elektronischen Vorrichtung an einer Fahrzeugaudiovorrichtung, umfassend
Bereitstellen eines magnetischen Mittels zum magnetischen Anbringen der mobilen elektronischen Vorrichtung an der Fahrzeugaudiovorrichtung; und
magnetisches Anbringen der mobilen elektronischen Vorrichtung an der Fahrzeugaudiovorrichtung mit dem bereitgestellten magnetischen Mittel;
ferner ein Bereitstellen elektrischer Verbindungen zum Verbinden der mobilen elektronischen Vorrichtung mit der Fahrzeugaudiovorrichtung; und
elektrisches Verbinden der mobilen elektronischen Vorrichtung und der Fahrzeugaudiovorrichtung mit den bereitgestellten elektrischen Verbindungen;
**dadurch gekennzeichnet, dass**
die mobile elektronische Vorrichtung eine persönliche Navigationsvorrichtung ist, und dass die elektrischen Verbindungen eine Verbindung für eine elektrische Stromversorgung umfassen.

8. Verfahren nach Anspruch 7, wobei
die mobile elektronische Vorrichtung mit einem ersten Permanentmagneten versehen ist und die Fahrzeugaudiovorrichtung mit einer Jochplatte oder einem zweiten Permanentmagneten versehen ist, und wobei die mobile elektronische Vorrichtung mittels des ersten Permanentmagneten an der Jochplatte oder dem zweiten Permanentmagneten der Fahrzeugaudiovorrichtung angebracht wird; oder
die mobile elektronische Vorrichtung mit einer Jochplatte versehen ist und die Fahrzeugaudiovorrichtung mit einem Permanentmagneten versehen ist, und wobei die mobile elektronische Vorrichtung an dem Permanentmagneten der Fahrzeugaudiovorrichtung angebracht wird.

9. Fahrzeugkommunikationssystem, umfassend
eine Fahrzeugaudiovorrichtung, insbesondere ein Autoradio, nach einem der Ansprüche 1-4;
eine mobile elektronische Vorrichtung nach einem der Ansprüche 5-6,
wobei die mobile elektronische Vorrichtung magnetisch anbringbar an und lösbar von der Fahrzeugaudiovorrichtung ist.

10. Fahrzeuginnenraum, umfassend eine Fahrzeugaudiovorrichtung nach einem der Ansprüche 1-4, welche in dem Fahrzeuginnenraum installiert ist, und eine mobile elektronische Vorrichtung nach einem der Ansprüche 5-6, welche magnetisch an der Fahrzeugaudiovorrichtung nach einem der Ansprüche 1-4 angebracht ist.

## Revendications

1. Dispositif audio de véhicule comprenant des moyens magnétiques pour la fixation d'un dispositif électronique mobile sur le dispositif audio de véhicule, le dispositif audio de véhicule comprenant en outre des raccordements électriques pour être raccordé au dispositif électronique mobile, **caractérisé en ce que** les raccordement électriques comprennent un raccordement pour une alimentation électrique, et **en ce que** le dispositif audio de véhicule est adapté pour y fixer un dispositif personnel de navigation à titre de dispositif électronique mobile.

2. Dispositif audio de véhicule selon la revendication 1, dans lequel les moyens magnétiques comprennent un aimant permanent ou une plaque de culasse, en particulier une plaque en fer.

3. Dispositif audio de véhicule selon la revendication 1 ou 2, dans lequel le dispositif audio de véhicule est une autoradio.

4. Dispositif audio de véhicule selon l'une des revendications précédentes, comprenant en outre une aide à l'ajustage configurée pour ajuster le dispositif électronique mobile sur le dispositif audio de véhicule.

5. Dispositif électronique mobile comprenant des moyens magnétiques pour sa fixation sur un dispositif audio de véhicule, le dispositif électronique mobile comprenant en outre des raccordements électriques pour être raccordé au dispositif audio de véhicule, **caractérisé en ce que** le dispositif électronique mobile est un dispositif personnel de navigation adapté pour être fixé sur un dispositif audio de véhicule, et **en ce que** les raccordements électriques comprennent un raccordement pour une alimentation électrique.

6. Dispositif électronique mobile selon la revendication 5, dans lequel les moyens magnétiques pour le fixer sur le dispositif audio de véhicule comprennent un aimant permanent ou une plaque de culasse, en particulier une plaque en fer.

7. Procédé de fixation d'un dispositif électronique mobile sur un dispositif audio de véhicule, comprenant
la fourniture de moyens magnétiques pour une fixation magnétique du dispositif électronique mobile sur le dispositif audio de véhicule; et
la fixation magnétique du dispositif électronique mobile sur le dispositif audio de véhicule à l'aide des moyens magnétiques fournis;
de plus, la fourniture de raccordements électriques pour raccorder le dispositif électronique mobile au dispositif audio de véhicule; et
le raccordement électrique du dispositif électronique mobile au dispositif audio de véhicule par l'intermédiaire des raccordements électriques fournis; **caractérisé en ce que**
le dispositif électronique mobile est un dispositif personnel de navigation et **en ce que** les raccordements électriques comprennent un raccordement pour une alimentation électrique.

8. Procédé selon la revendication 7, dans lequel
le dispositif électronique mobile est muni d'un premier aimant permanent et le dispositif audio de véhicule est muni d'une plaque de culasse ou d'un deuxième aimant permanent, et dans lequel le dispositif électronique mobile est fixé sur la plaque de culasse ou sur le deuxième aimant permanent du dispositif audio de véhicule par l'intermédiaire du premier aimant permanent; ou
le dispositif électronique mobile est muni d'une plaque de culasse et le dispositif audio de véhicule est muni d'un aimant permanent, et dans lequel le dispositif électronique mobile est fixé sur l'aimant permanent du dispositif audio de véhicule.

9. Système de communication de véhicule, comprenant
un dispositif audio de véhicule, en particulier une autoradio, selon l'une des revendications 1 à 4;
un dispositif électronique mobile selon l'une des revendications 5 à 6;
dans lequel le dispositif électronique mobile peut être fixé magnétiquement sur le et détaché du dispositif audio de véhicule.

10. Habitacle de véhicule comprenant un dispositif audio de véhicule selon l'une des revendications 1 à 4 installé dans l'habitacle de véhicule et un dispositif électronique mobile selon l'une des revendications 5 à 6 fixé magnétiquement sur le dispositif audio de véhicule selon l'une des revendications 1 à 4.
